# EUROPEAN PATENT SPECIFICATION

(11) **EP 1 609 214 B1**
(45) Date of publication and mention of the grant of the patent: **06.08.2008**
(21) Application number: 03780407.7
(22) Date of filing: 17.12.2003
(51) Int. Cl.: H01Q 25/00, H01Q 21/06, H01Q 21/20, H01Q 3/24, H01Q 21/00

(54) **MULTIBEAM PLANAR ANTENNA STRUCTURE AND METHOD OF FABRICATION**
PLANARE MEHRKEULENANTENNE UND HERSTELLUNGSVERFAHREN
STRUCTURE D'ANTENNE PLANAIRE MULTIFAISCEAUX ET SON PROCEDE DE FABRICATION

(30) Priority: 14.02.2003 US 447527 P; 10.10.2003 US 683301
(43) Date of publication of application: 28.12.2005
(73) Proprietor: Nortel Networks Limited, St Laurent, Québec H4S 2A9 (CA)
(72) Inventor: SMITH, Martin, Chelmsford, Essex CM1 4XQ (GB); URQUHART, Andrew, Bishops Stortford, Hertfordshire CM23 4Q (GB); ABRAHAM, Ian, Bishops Stortford, Hertfordshire CM22 7E (GB)
(74) Representative: Loisel, Bertrand
(86) International application number: PCT/GB2003/005517
(87) International publication number: WO 2004/073115

(56) References cited:
- EP-A- 0 253 128
- EP-A- 0 492 010
- EP-A- 0 975 047
- WO-A-98/29920
- WO-A-02/060009
- DE-A- 4 239 597
- GB-A- 2 248 344
- GAO S C ET AL: "Low cost, dual linearly polarised microstrip patch array" IEE PROCEEDINGS H. MICROWAVES, ANTENNAS & PROPAGATION, INSTITUTION OF ELECTRICAL ENGINEERS. STEVENAGE, GB, vol. 148, no. 1, 9 February 2001 (2001-02-09), pages 21-24, XP006016103 ISSN: 0950-107X

## Description

The invention relates generally to microwave planar or "flat plate" multibeam antenna structure and fabrication processes and moro particularly to the provision of such a simplified, cost-effective structure and process.

### BACKGROUND TO THE INVENTION

Within a wireless communication network, such as a distributed wireless communication network Involving a combination of access radio links and transit radio links, it may be desirable to provide for both directional transmission, from a first node to a second node (i.e., "point-to-point"), and broadcast transmission, from a first node to any receiving equipment within the coverage area. Such "broadcast" transmission may be in tho form of an omni-directional transmission, such as one covering a 360 degree field of coverage, or a somewhat lesser field of coverage that is nevertheless broader than is the case of a single directional transmission. Various antenna arrangements, such as "flat plate" antenna structures, have been proposed to address the needs for directional and broadcast transmissions. However, many of these proposals have been encumbered with the disadvantage of undue complexity, arising In part from their rellance on sophisticated, and therefore costly, multilayer designs requiring conductor leads to traverse paths through the antenna substrate parallel as well as perpendicular to the plane of the substrate.

### SUMMARY OF THE INVENTION

According to a first aspect of the invention there is provided a multiple beam antenna as recited in claim 1

This provides a low cost, high functionality multiple beam antenna. The multiple beam antenna can be shaped such that the directional antennas cover a full 360° or alternatively cover any other range of angles, (c. g. 270° or 180°).

The plurality of directional antennas and the plurality of electrical connection may be formed in the conductive layer in a single fabrication step.

The flexible substrate comprises a single conductive layer.

By integrating the antennas and electrical connections into a single layer, this reduces the part count which reduces the complexity and cost of fabricating the multiple beam antenna.

The multiple beam antenna may further comprise a beamformer.

The beam former may be formed in said conductive layer.

Advantageously, this further reduces part count.

The plurality of antenna elements may be arranged in an array. The array may be a one dimensional array (a row or a column) or a two dimensional array.

The multiple beam antenna may further comprise a plurality of overlay couplers.

Advantageously, this eliminates any right angle transitions within the signal path which reduces the complexity, cost and losses of the device.

The overlay couplers may connect said electrical connections to said switch circuitry.

Advantagaously, this reduces part count.

The electrical connections may connect each of said plurality of directional antennas to said switch circuitry.

The electrical connections may be microstrip lines.

The flexible substrate may be conformed In close proximity to a back plate.

The electrical connections may extend generally ln one direction towards one area of said substrate.

Some of said electrical connections may extend generally toward a first side of said substrate to a first predetermined area, and other of said electrical connections may extend generally toward a second, opposite side of said substrate to a second predetermined area.

At least some of the antenna elements may be provided as microstrip antenna elements.

At least some of the antenna elements may be provided as probe fed aperture elements.

The switch circuitry and directional antennas may be arranged on a common side of said substrate.

The substrate may be arranged In a substantially 3-dimensional configuration to position the one dimensional arrays of antenna elements In columns, and wherein at least two adjacent columns are not coplanar.

The multiple beam antenna may further comprise a ground plane; and a dielectric interposed between at least a portion of said substrate and said ground plane.

The flexible substrate may further comprise a second conductive layer, and the multiple beam antenna may further comprise:
a second plurality of directional antennas formed in said second conductive layer; and
a second plurality of electrical connections formed in said second conductive layer connecting each of said second plurality of directional antennas to at least one predetermined area of said substrate.

The plurality of directional antennas may be substantially aligned with said second plurality of directional antennas.

The plurality of directional antennas may be arranged to provide beams of a first polarisation and said second plurality of directional antennas may be arranged to provide beams of a second polarisation.

The plurality of directional antennas may be arranged to operate at a first range of frequencies and said second plurality of directional antennas may be arranged to operate at a second range of frequencies.

The multiple beam antenna may have a substantially hexagonal cross-section. It may alternatively have a substantially conical shape.

According to a second aspect of the invention there is provided an antenna module comprising a multiple beam antenna as described above.

The antenna module may further comprise: a ground plane; electronics; a dielectric layer between said flexible substrate and said ground plane; and an outer protective housing.

The antenna module may further comprise: control software.

The flexible substrate may be wrapped around said ground plane.

According to a third aspect of the invention there is provided a communications network comprising a plurality of multiple beam antennas as described above.

According to a fourth aspect of the invention there is provided a communications network comprising a plurality of antenna modules as described above.

According to 3 fifth aspect of the invention there is provided a method of fabricating a multiple beam antenna as recited in claim 26.

Advantageously,this provides a simple and low cost route to fabricate a multiple beam antenna,

The method may further comprise the step of shaping said flexible substrate such that it fits against an object.

Advantageously, this provides flexibility In the shape and location or the multiple beam antenna and may result in efficient use of space.

The object may comprise a housing. The object may also be an element to which the multiple beam antenna may be mounted, for example a pole or sign.

The method may further comprise the step of mounting control electronics within said housing.

Advantageously this enables fabrication of a compact multiple beam antenna.

The method may further comprise the step of forming a beamformer in said conductive layer.

The method may further comprise the stop of connecting said flexible substrate to a second substrate will a plurality of overlay couplers.

Advantageously, the integration of additional functionality into the flexible substrate reduces the part count and simplifies the fabrication process. This may provide benefits in cost, manufacturing time and reliability.

The preferred features may be combined as appropriate, as would be apparent to a skilled person, and may be combined with any of the aspects of the invention.

The document WO98/29920 discloses the features of the preamble of claim 1.

### BRIEF DESCRIPTION OF THE DRAWINGS

An embodiment of the invention will now be described with reference to the accompanying drawings in which:
Figure 1A is a schematic diagram of the substrate for a hexagonal antenna;
Figure 1B is a top sectional view of an antenna structure formed from the substrate of Figure 1A;
Figure 1C is an enlarged view of a section of figure 1B;
Figure 1D shows an alternative arrangement for aligning and fixing the circuit board to that shown in figure 1C.
Figure 2 is a schematic diagram of the substrate for a hexagonal antenna antenna;
Figure 3A is a plan view of an octagonal antenna structure illustrating details of an associated support structure;
Figure 3B is an expanded view of a section of figure 3A;
Figure 3C is a three dimensional view of the back plane of a hexagonal antenna structure as shown in figure 1 B;
Figure 4A is a sectional side view of a portion of an antenna;
Figure 4B is a sectional side view of an alternative connection to that shown in figure 4A;
Figures 5A and 5B are top sectional and side elevational views, respectively, of antennas constructed in accordance with the invention;
Figures 6A and 6B are schematic illustrations of circuit layouts for different polarization arrangements for antennas in accordance with alternative aspects of the invention;
Figures 7 - 11 are schematic illustrations of alternative track layout arrangements; and
Figures 12 and 13 are flow diagrams of example methods of fabricating an antenna.

### DETAILED DESCRIPTION OF INVENTION

Embodiments of the present invention are described below by way of example only.

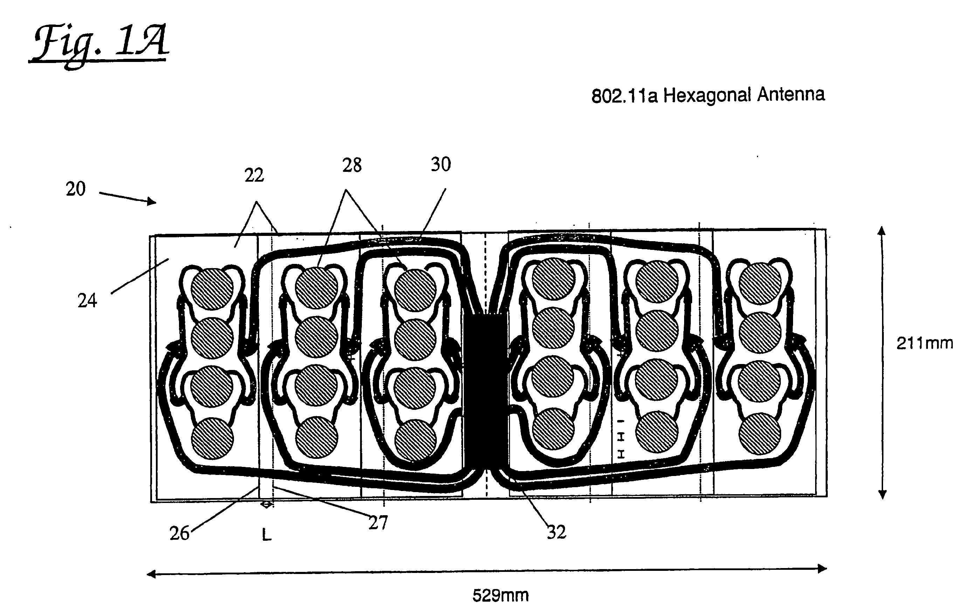

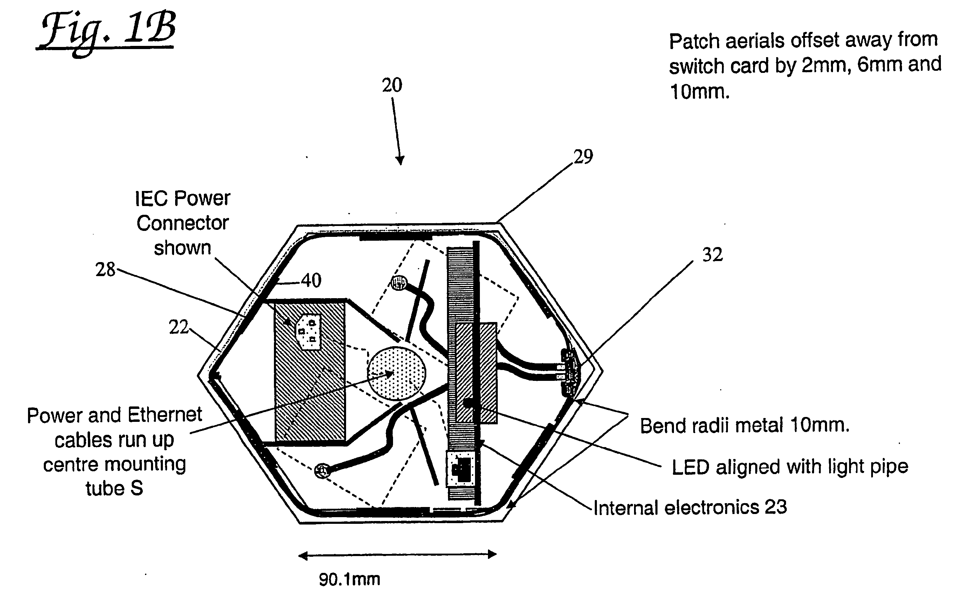

With reference to Figures 1A-1C, a multiple beam antenna in accordance with one preferred aspect of the invention, designated generally by reference character 20, is described. The antenna 20 is comprised of a plurality of panel sections 22 formed in a thin film flexible (or deformable) substrate 24. The substrate 24 can be formed from a suitable dielectric material, such as a polyamide (such as Kapton^{®}) or a polyester (for example, Mylar^{®}) film of the order of from about 0.1 mm to about 0.5 mm in thickness. Other suitable dielectric materials can be used for the substrate 24 as will be evident to persons skilled in the antenna art. The panel sections 22 are separated from one another by the illustrated divider lines 26, although such lines 26 are provided for illustration purposes only to facilitate depiction of discrete antenna segments. While six panel sections 22 are depicted, corresponding to a panel antenna having a hexagonal configuration, as depicted in Fig. 1B, a greater or lesser number of panel sections 22 can be provided, in accordance with the desired number of antenna directional orientations. The lines 27 (shown as dotted lines) are for illustration purposes only and indicate the position of the bend (or corner) when the substrate is formed into the required shape. The length L between depicted lines 26 and 27 represents the length of substrate 24 required between the sections 22 to position the sections 22 in a desired angular orientation, such as the hexagonal array depicted in Fig. 1B.

The antenna shown in figures 1A-1C has regularly spaced antenna elements and flat panels. This is shown by way of example only, and the antenna elements may be irregularly spaced and the antenna may be formed in any shape, for example, circular, substantially square or conical (the panels 22 may be arranged such that they are not co-planar and/or not parallel).

The spacing of the antenna elements is described in more detail in patent application WO2004/079858.

Each panel section 22 includes a directional antenna shown in Fig. 1A as an array of antenna elements 28, which can be in the form of conductive patches, microstrip elements or probe fed aperture elements that are arranged in columns connected by conductors (or electrical connections) 30 to a circuit board (or transition board) 32. The conductors (or feed lines) 30 are arranged with feed lines that are routed above and/or below the antenna element array. The conductors can optionally be configured as microstrip lines having a nominal width of about 1 mm to about 3 mm, although different widths can be provided in accordance with the patterning technique employed. The foregoing conductor routing schemes avoid the need for passing the conductors transversely into the substrate for routing to the circuit board. This serves to minimize substrate thickness and eliminates stresses that would otherwise be associated with the conductors as a consequence of their traversal of angular paths, all of which can compromise antenna reliability and performance. Simple selection switching can be employed to energize the respective columns of antenna elements. While a total of four antenna elements per panel section 22 are depicted, it is to be appreciated that a greater or lesser number of antenna elements can be provided in accordance with the teachings of the invention and the demands of the application (elevation beam width, gain, etc.) with which the antenna is to be used.

The directional antennas shown in figure 1A comprise a column of antenna elements. However, the directional antennas may have a different structure, for example they may comprise only one antenna element, or they may comprise a row of elements in a horizontal plane. Alternatively the directional antennas may comprise a two-dimensional array of antenna elements (e.g. 2x2 arrangement).

In the antenna arrangement (or antenna module) depicted in Fig. 1B, the antenna 20 is formed around a metal back plane 40 that positions the antenna elements 28 in a prescribed (or predetermined) orientation, as will be described in greater detail below. The antenna 20 is maintained in proper orientation by suitable infrastructure (not shown), including but not limited to poles, posts, walls, mounting brackets, trees and signs. The antenna is surrounded by a protective covering or radome 29 to protect the antenna from the elements. The antenna is formed such that the patch array and associated conductors are formed in a single layer, as illustrated and as described later. The antenna formed in the single layer can be a single or dual polar design. The radome 29 may include an outer shield layer and a sun shield on top of the outer shield layer. Power and other connections to the antenna (e.g. Ethernet cables) may run up the centre mounting tube S. These connections may connect to the circuit board 32, the internal electronics 23 or other components within the antenna 20. The arrangement of electronics and other internal components shown in figure 1B is by way of example only, and the antenna may in some implementations not include any internal components or electronics.

There are alternative methods of producing a dual polar design, including using a single layer substrate with metallization on both sides (one polarisation on each side) or multiple layers can be provided and aligned with one polarization radiating through the other. In such instances, the layers 24 can be mechanically fastened or adhesively bonded to maintain positional alignment and structural integrity. Multiple layers may also be used for multiple band antennas, where each layer contains directional antennas for different bands of frequencies.

The circuit (or transition) board 32 is shown in figures 1A-D as a discrete element, however it may alternatively be integrated into the substrate, for example by being bonded as a laminate. The circuit board may be a single layer, double sided or multilayer circuit board. The circuit board may include different functionality, including but not limited to switching and / or beamforming. The switching functionality may switch parameters including but not limited to beam, polarisation and frequency band.

Example material details, (including dimensions by way of example only), for the antenna shown in figure 1B are listed below in order from inside to outside:
- Steel or Aluminium ground with 5mm by 33mm patch recesses and air release pinholes.
- Air in patch recesses or if required polyethelene foam.
- 1 or 1.5mm closed cell polyethelene foam. This may have 5µm low loss glue slow tack coatings on both sides or may be without glue and clamped in place.
- Mylar 0.004" with 0.0012" copper on outside.
- 2mm Air Gap (alternatively this could be filled, for example with foam as above).
- 3mm outer housing (2mm would flex significantly in the wind) uPVC.

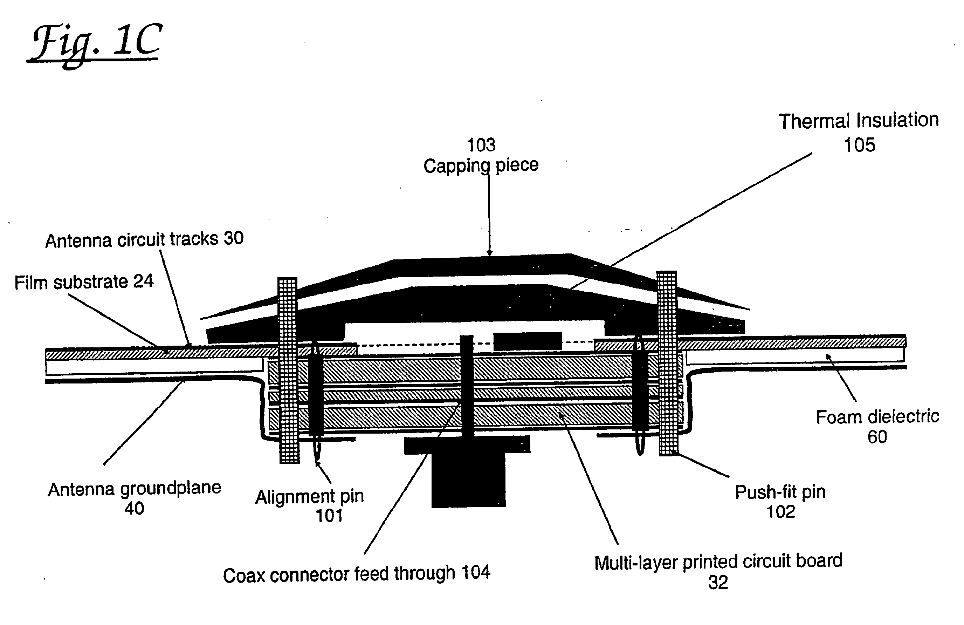

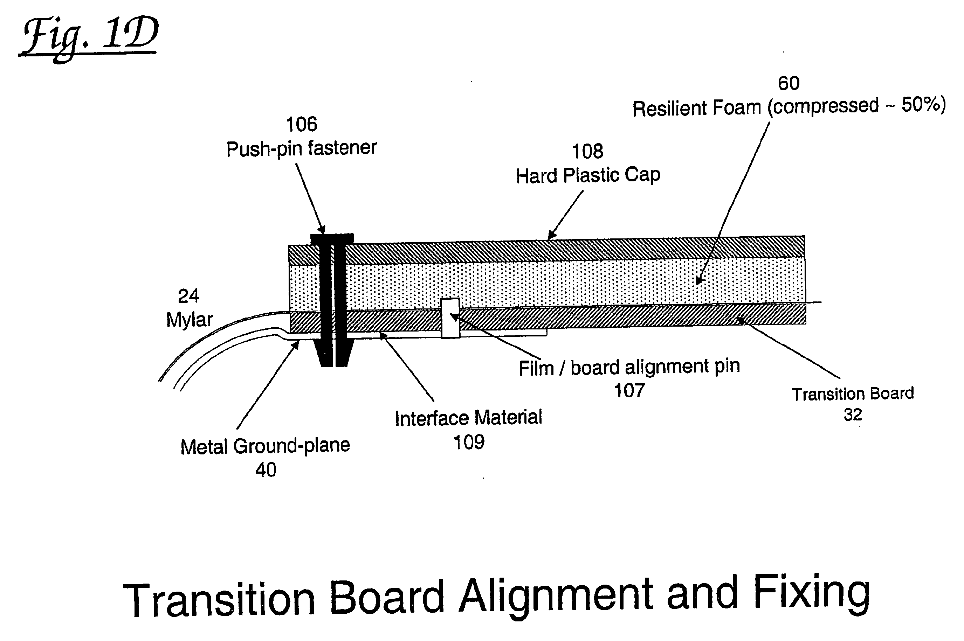

Figure 1C shows an enlarged section of figure 1B and shows the arrangement for aligning and fixing the circuit board 32 to the substrate 24. Alignment pins 101 are used to align the circuit board 32 to the substrate 24. These pins may be discrete items (as shown in figure 1 C) or alternatively the may be integral to one of the other component parts, for example the capping piece 103. Ground connections between the piece parts are provided by push-fit pins 102 pressed onto vias on the circuit board and attached to the ground plane or back plane 40. The push-fit pins may be discrete items (as shown in figure 1C) or alternatively they may be integral to one of the other component parts, for example the ground plane 40. A capping piece 103 serves to protect and strengthen the structure. An alternative arrangement is shown in figure 1D. This shows a push-pin fastener 106 which holds the substrate 24 and board 32 together. The two are aligned by a separate alignment pin 107. A plastic cap 108 provides for protection and stabilisation of the join and the connection between the ground plane and the transition board is achieved by an interface material 109 which is conductive. Connections may be made to the circuit (or transition) board via a coaxial connector 104. Thermal insulation 105 may optionally be provided between the capping piece 103 and the circuit board.

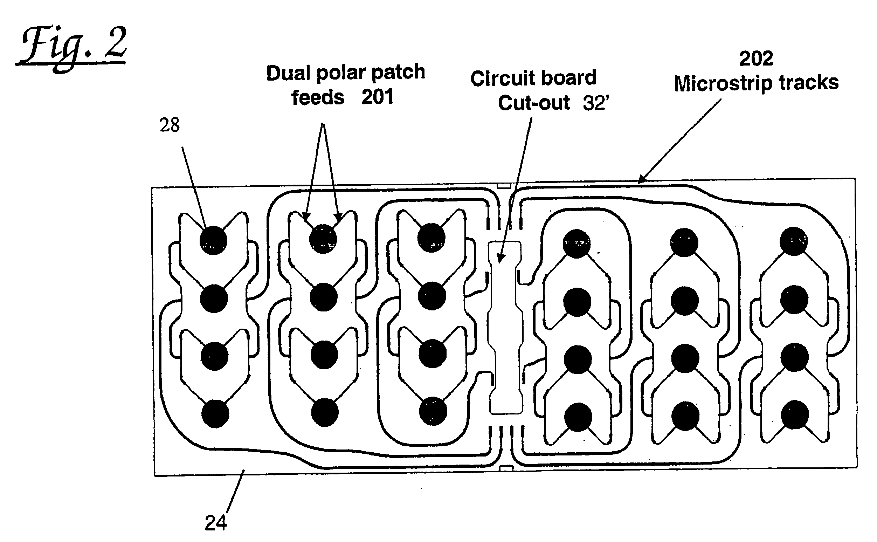

Figure 2 shows another aspect of the present invention and depicts the flexible substrate 24 (or film) unwrapped to show the antenna patches 28 and tracks 202. The design shown in figure 2 provides that the circular patch can be fed in two polarisations. This requires that the feed of one polarisation does not unduly compromise the performance of the other polarisation.

Fig. 2 shows an antenna that is formed from four antenna elements 28 per panel section. The antenna elements 28 are arranged as dual polar patches (using dual polar feeds 201) so as to generate a multibeam array having a mutually orthogonal polarization, such as -45 degrees and +45 degrees, respectively. The dual polarization inputs are delivered to the patches through the circuit board which is placed in a cut-out 32' in the substrate in a manner well known in the art.

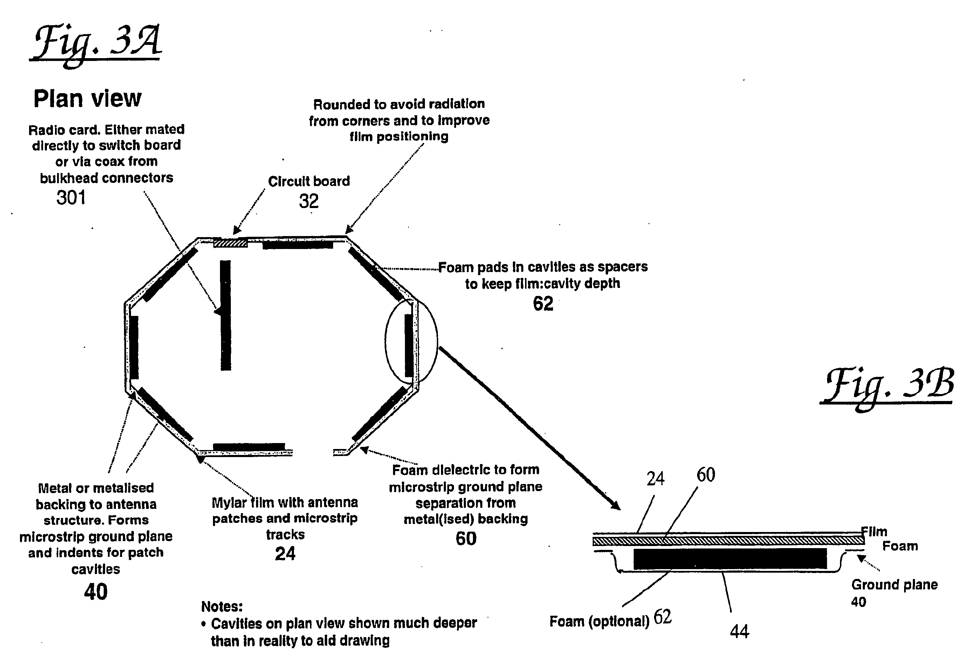

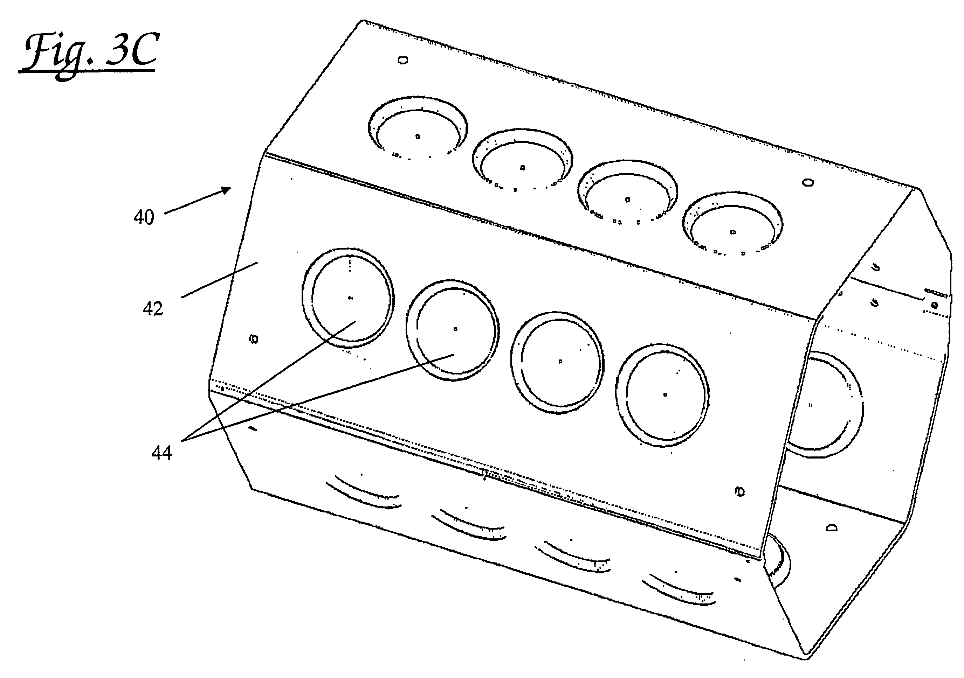

Figs. 3A and 3B illustrate further aspects of the invention, comprising an eight panel array that is depicted around back plane 40 arranged to provide an octagonal array of antennas. The back plane 40 is typically formed of a suitable metal, such as aluminium, that is inexpensive and capable of being formed into a suitable shape. The back plane 40 is formed of a stamped panel (as shown in figure 3C) that is provided with a plurality of recesses 44 dimensioned and configured to receive corresponding antenna elements 28. The antenna 20 is arranged in close proximity to the back plane 40 such that the antenna elements 28 are arranged in close proximity to the recesses 44. Suitable bonding or coupling media can optionally be provided to maintain the position of the antenna in the desired orientation and proximity to the back plane 40. Foam or other suitable insulative/dielectric layers 60, 62 can optionally be provided to maintain the spatial alignment and separation of the substrate 24 (and particularly the conductors 30 carried thereby) relative to the back plane 40. Insulative/dielectric layer 60 optimally formed with a thickness of about 1mm, whereas optional insulative/dielectric layer 62 can be thicker in accordance with the depth of the recesses 44 and the physical characteristics of the substrate 24.

The back plane may act as a ground plane or a separate ground plane may be provided. A three-dimensional view of a back plane 40 of a six panel antenna (as shown in figure 1 B) is shown in figure 3C. The back plane takes the form of stamped panel 42. While annular recesses 44 are depicted, other configurations can be provided so as to complement the shape of the antenna elements 28.

The back plane has additional benefits in that it provides a rigid mechanical structure in which the internal electronics may be housed. The ground plane of the back plate may also be designed so as to provide EMI (Electro-Magnetic Interference) shielding for the internal electronics, reducing spurious external radiation from the unit. The wrap-around ground plane design of the antenna structure also enables electromagnetic coupling between the internal electronics and the antenna to be minimised.

The back plane is shown having rounded corners, (for example having a 10mm bend radii). This is to avoid radiation from the corners and to improve film positioning.

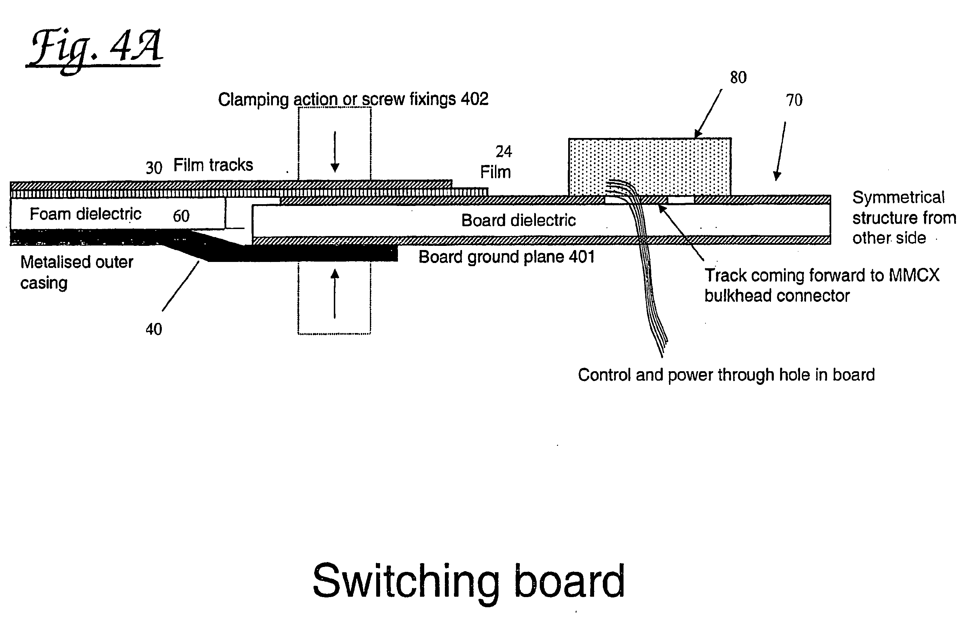

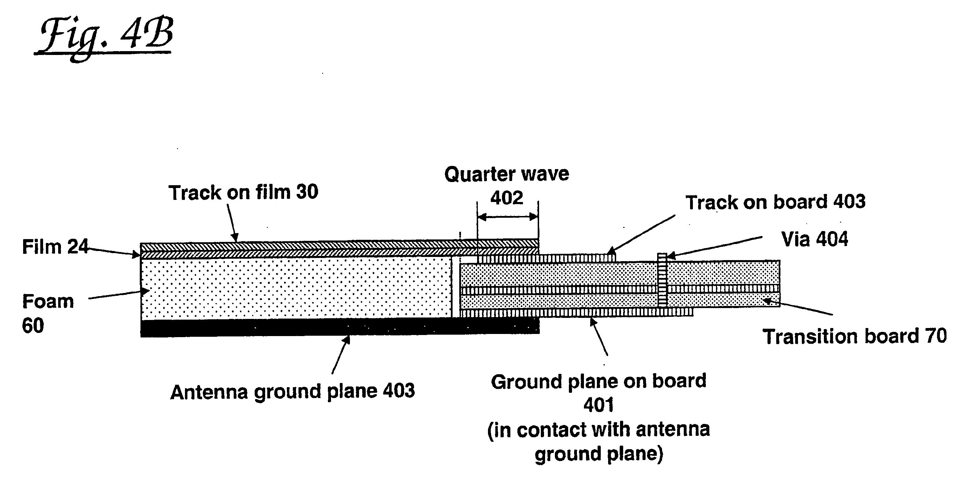

Fig. 4A depicts coupling of the antenna substrate 24 to the circuit board (70, generally) and associated circuitry (80, generally). This board may be a switch board or a beamformer and the circuitry may be for switching or beamforming, as described earlier. Suitable bonding or coupling media 402 (adhesive, clamps, fasteners (threaded and otherwise)) may be employed to secure the substrate to the circuit board 70 and the back plane 40. lnsulative/dielectric film 60 can be provided to maintain support for the substrate 24, particularly in the vicinity of the circuit board 70 and associated circuitry (e.g. switchgear) 80, and electrical isolation of the conductors 30 from the back plane 40, as discussed previously. The connection of the antenna substrate to the switch board may be achieved by means such as overlay couplers or probes into waveguides. Preferably the connection is achieved without the need for the signals to pass through right angle transitions or through solder joints. In figure 4A, the board is shown as having a different thickness to the foam. An alternative configuration for this connection is shown in figure 4B, where the foam 60 and the board 70 are substantially the same thickness. Figure 4A shows a double-sided board, whereas figure 4B shows a multilayer board. This is by way of illustration only and the board can have any appropriate construction. The board 70 may have a ground plane 401 which may connect to, or be in contact with, the antenna ground plane 403, which itself may be the back plane 40 or a separate item. The board may further comprise tracks 403 and vias 404 as is well-known in the art. Figure 4B shows an overlap of a quarter wave of the track on the film over the track on the board. Alternative overlaps may also be used.

Figures 4A and 4B show non contact methods of coupling between the track on the film and the track on the board. Non contact methods have benefits in reliability, although contact methods could alternatively be used.

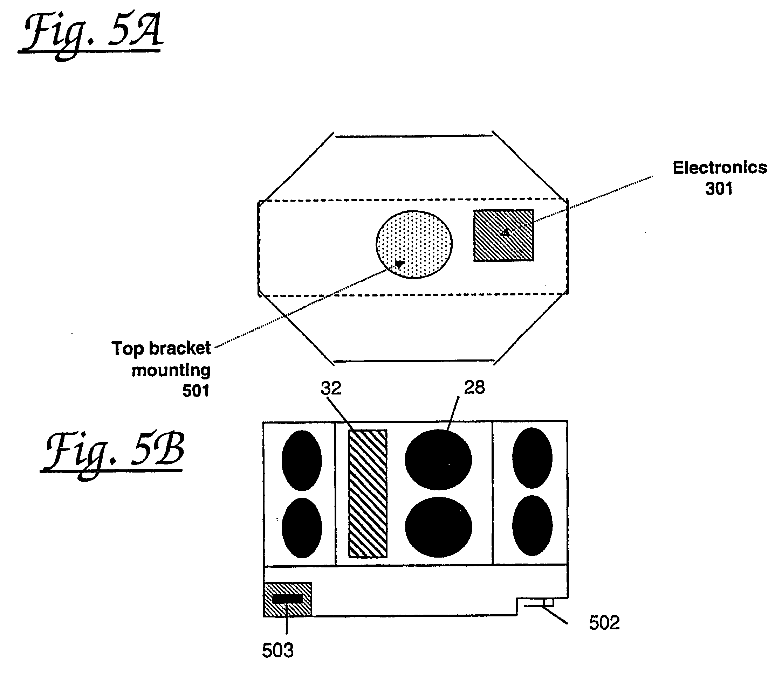

Figures 5A and 5B depict selective structural aspects of an octagonal antenna array. Different patch arrays are described to provide for desired azimuth beamwidth orientations. Electronics 301 may be housed inside the antenna structure, (as also shown in Fig. 3A and Figure 1B, internal electronics 23), and as shown the panels of the antenna structure need not be equal in size. This may be to accommodate the circuit board 32. The antenna structure may be mounted via a mounting bracket 501 at the centre of the structure. Alternatively, the antenna could be wrapped around a structure such as a pole, lamp post or tree. The antenna elements 28 shown may have a 60° azimuth beamwidth and it may be beneficial to use two (as shown) in a vertical array for 30° elevation beamwidth, or 3 or 4 for 20° or 15° beamwidth respectively.

Additional antennas 502, 503 may be mounted onto the antenna structure, for example, a vertical polarisation PIFA antenna 502 and a horizontal polarisation PIFA antenna 503, which can be used to provide additional or alternative omni-directional coverage., e.g. for an access link.

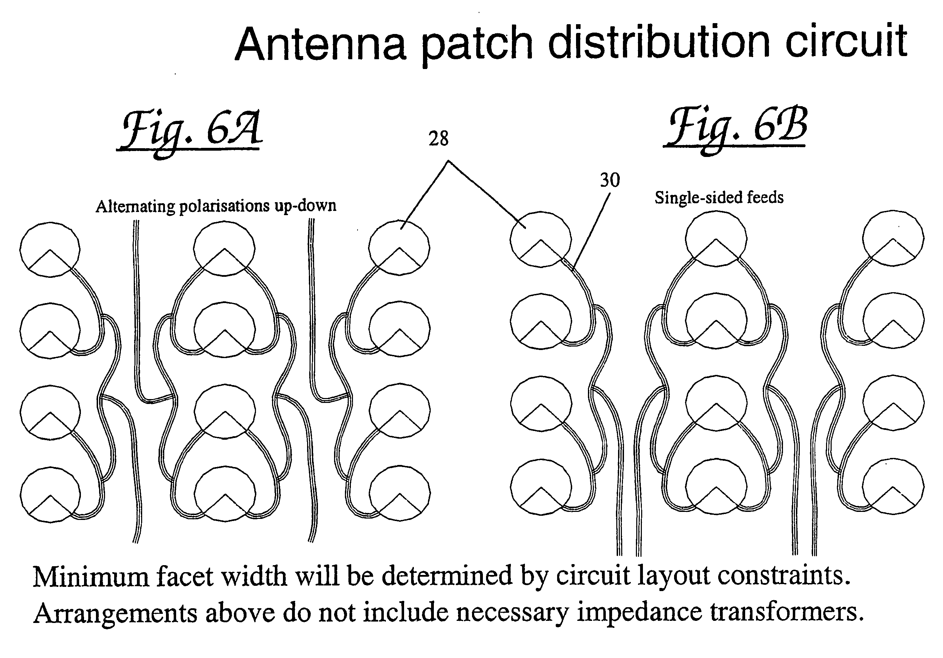

Figs. 6A and 6B depict different arrangements for running conductor/feed lines 30 to the antenna elements 28 (the antenna patch distribution circuit). In Fig. 6A, the conductors 30 extend from opposite sides of the substrate 24 (not shown) to the antenna elements 28 to permit closer positioning of columns of antenna elements than is possible in other conductor arrangements, such as the arrangement depicted in Fig. 6B. As is evident from the foregoing, different conductor arrangements can be implemented without deviating from the teachings of the present invention. As described above, the directional antennas need not comprise of columns of antenna elements. They could comprise other structures including rows of elements (in a horizontal plane), two dimensional arrays or single elements.

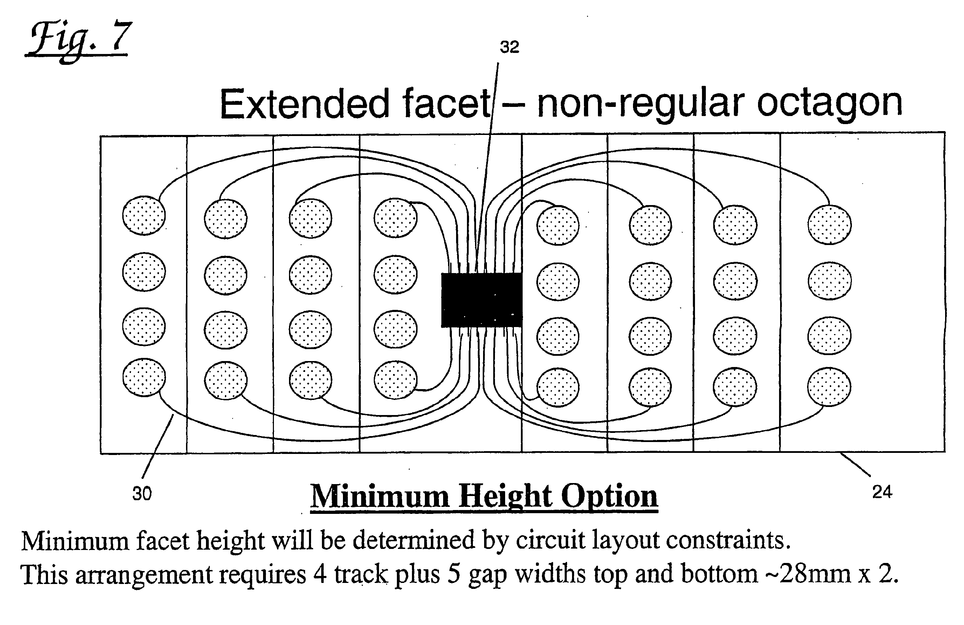

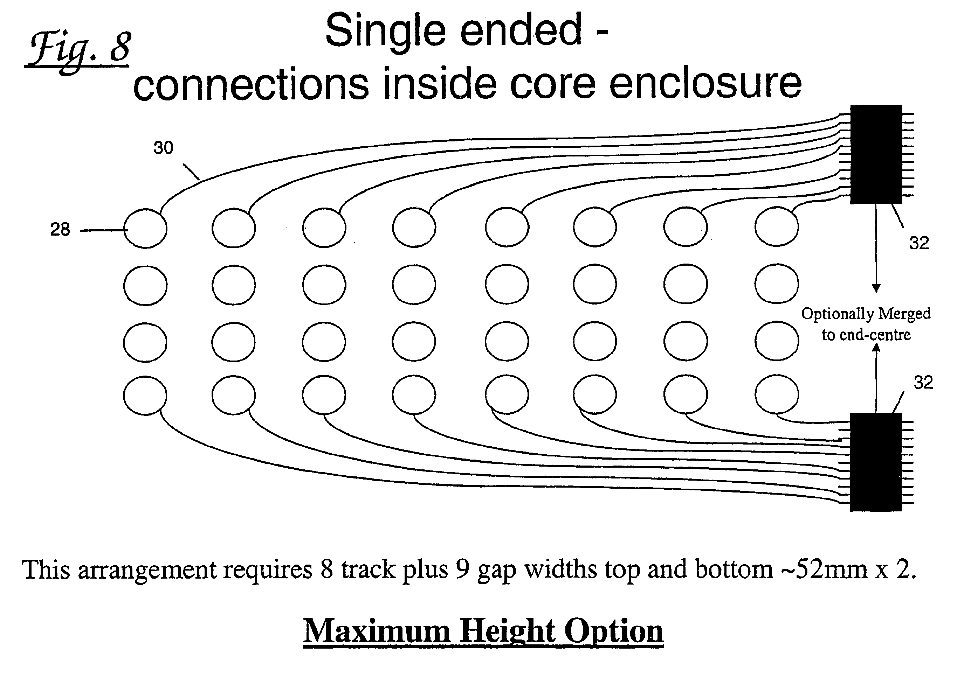

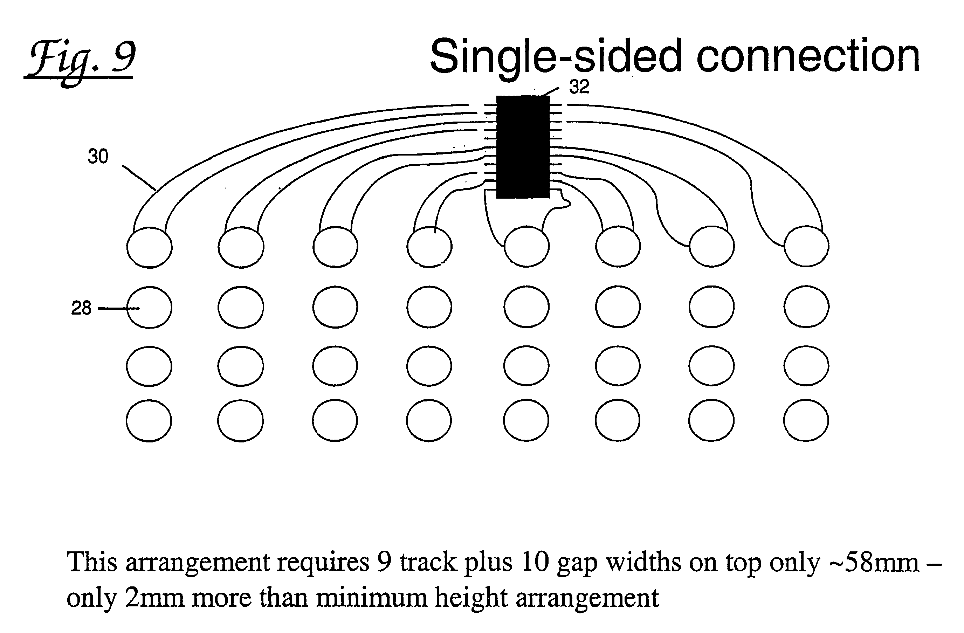

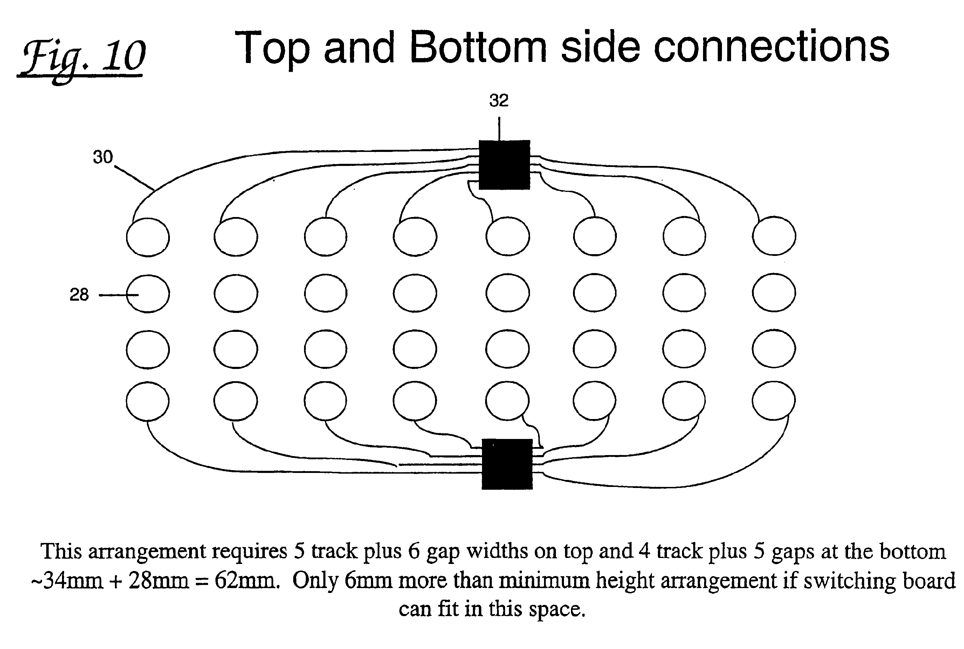

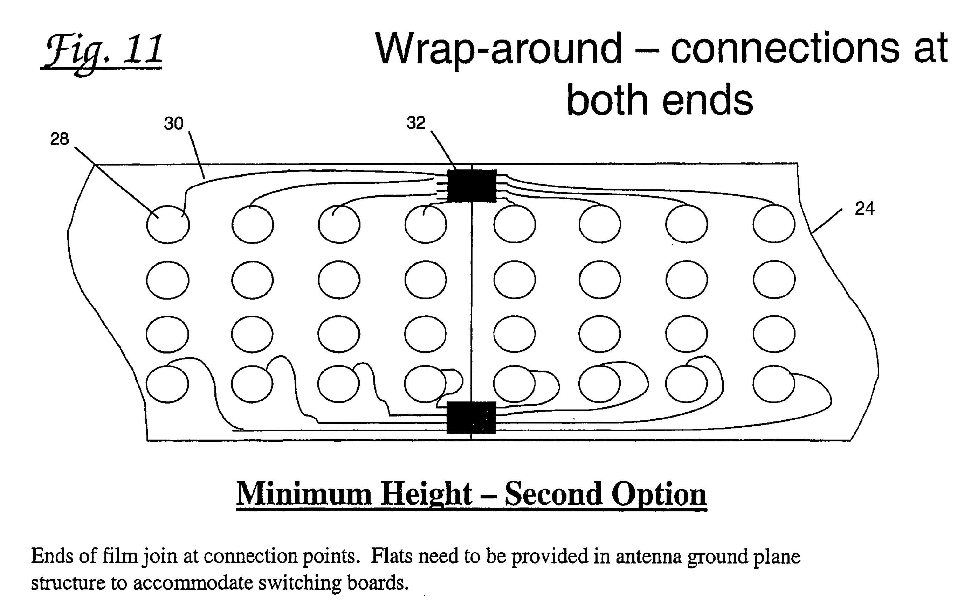

Figs. 7-11 illustrate further antenna element 28, conductor 30 and circuit board 32 configurations. These figures are schematic illustrations only and do not show the connections within the columns of antenna elements. The arrangement depicted in Fig. 7 (which is similar to that of Fig. 6A), has the circuit board 32 positioned adjacent to one panel section, thus minimizing the overall height of the resulting antenna (at the "expense" of additional circumference of the resulting antenna structure). In contrast, the arrangement depicted in Fig. 8 reduces antenna structure circumference by positioning the circuit board 32 adjacent to an end of the substrate, thereby providing for enhanced isolation of the circuitry on the board 32 form the antenna elements. A single sided connection of the type depicted in Fig. 6B is illustrated further in the embodiment of Fig. 9. This arrangement, while increasing overall antenna structure height, allows for a reduction in structure circumference by virtue of the leads and the circuit board being positioned along one side of the antenna substrate. Figs. 10 and 11 illustrate arrangements including two circuit boards 32, the difference between the two drawings being the positioning of the boards. In figure 10 they are shown generally in-line with a columnar array of antenna elements as opposed to straddling two such columnar arrays as in Figure 11. As can readily be appreciated by persons of skill in the art, the configuration of Fig. 10 serves to minimize circumference, at the expense of greater height, whereas the arrangement depicted in Fig. 11 is to the contrary.

The multiple beam antenna may have individually controlled downtilt on each of the beams. The individually controlled downtilt may be fixed in value, for example by the shape of the antenna, e.g. the substrate may be formed around a conical structure, such as might be mounted on the ceiling of a room. In such an arrangement, the columns of elements will be neither parallel nor coplanar. The value of the individually controlled downtilt may alternatively be fixed electrically. It is also possible to have individually controlled variable downtilt on each of the beams of the antenna. This variation of the individually controlled downtilt may be achieved electrically either through variable electronic control or by mechanically changing the electrical properties of the circuit. One such method of varying the downtilt is by sliding a dielectric layer over the antenna circuitry.

Although the drawings show structures with 6 or 8 panels, the structure may have more or less panels. For example a structure having two panels may be formed around (or inside) a structure such as a sign to provide two directional beams in opposite directions. This may be applicable for coverage of a street or corridor.

The multiple beams may provide coverage over a range of angles less than 360º (unlike the antenna shown in figures 1A and 1B),

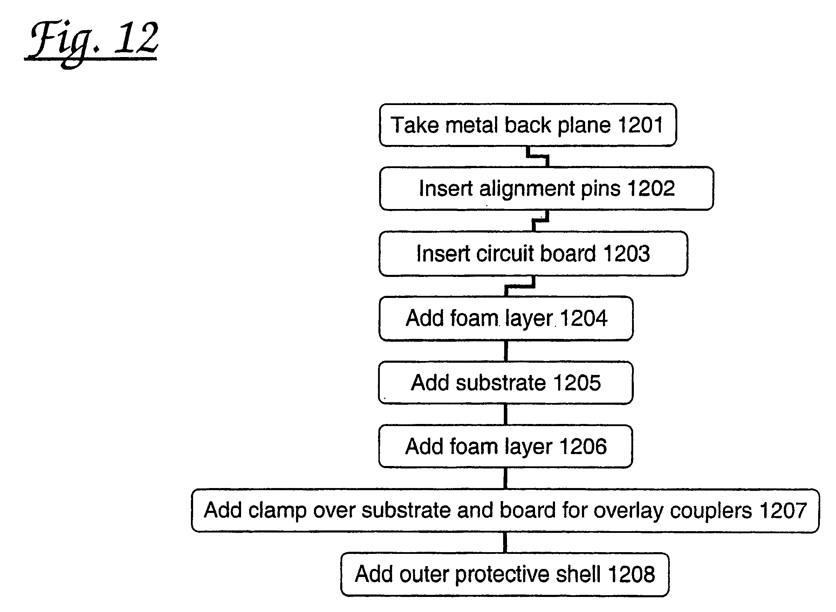

Figure 12 shows a flow chart of the fabrication process for such a multiple beam antenna:
Step 1201: Take metal backplane 40 (e.g. as shown in figure 3C). This may consist of more than one part that needs to be joined together, e.g. two halves of a shell.
Step 1202: Insert alignment pins (101; 107)
Step 1203: Insert circuit board 32, aligning with pins, for example as shown in figures 1C or 1D.
Step 1204: Add 1.5mm foam layer
Step 1205: Add substrate 24
Step 1206: Add 2mm foam layer
Step 1207: Add clamp over substrate and circuit board for overlay couplers, for example as shown in figures 4A and 4B.
Step 1208: Add outer protective shell (or radome) 29. This may consist of multiple pieces, e.g. two halves of a shell and a sun cover on top.

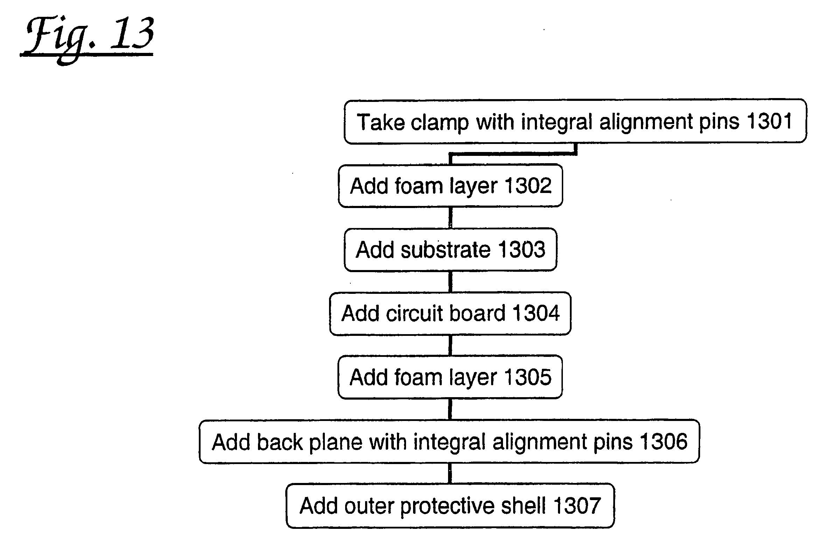

An alternative flow chart of the fabrication process is shown in figure 13:
Step 1301: Take clamp with integral alignment pins. This may be a modified version of the capping piece 103 as shown in figure 1C.
Step 1302: Add foam layer, aligning it with the aligning pins of the clamp.
Step 1303: Add substrate 24, aligning it with the aligning pins of the clamp.
Step 1304: Add circuit board 32, aligning it with the aligning pins of the clamp.
Step 1305: Add foam layer, aligning it with the aligning pins of the clamp.
Step 1306: Add back plane 40. The back plane may have integral alignment pins, and may consist of more than one piece.
Step 1307: Add outer protective shell 29. Again, this may comprise several pieces.
Steps 1301-1305 may be carried out with the foam layers and substrate laid flat. This requires that step 1306 also comprises wrapping the foam layers and substrate around the back plane and engaging the layers and substrate with any appropriate alignment pins integral to the back plane.

## Claims

1. A multiple beam antenna (20), comprising:
a flexible substrate (24) having a single conductive layer;
a plurality of directional antennas formed in the conductive layer, each of said plurality of directional antennas comprising one or more antenna elements;
a plurality of electrical connections (30) formed in the conductive layer connecting said antenna elements to at least one predetermined area of said substrate; and
a ground plane (40);
wherein said flexible substrate is shaped so that said plurality of directional antennas point in prescribed directions and so that at least some directional antennas of said plurality of directional antennas are not coplanar, and, wherein said ground plane (40) conforms to the shape of the flexible substrate, and is arranged to oppose all antenna elements; **characterised in that**:
said multiple beam antenna comprises a double sided or multi layer circuit board (32, 70, 80) disposed between the flexible substrate and the ground plane in the predetermined area of said substrate and arranged for coupling switching and/or beam forming circuitry to the plurality of electrical connections.

2. A multiple beam antenna as claimed in claim 1, wherein said plurality of directional antennas and said plurality of electrical connections are formed in the conductive layer in a single fabrication step.

3. A multiple beam antenna as claimed in claim 1, further comprising: a beamformer.

4. A multiple beam antenna as claimed in claim 3, wherein said beamformer is formed in said conductive layer.

5. A multiple beam antenna as claimed in claim 1, wherein the plurality of antenna elements are arranged to provide dual polarisations.

6. A multiple beam antenna as claimed in claim 1, wherein the plurality of antenna elements are arranged in an array.

7. A multiple beam antenna as claimed in claim 6, wherein said array is a one-dimensional array.

8. A multiple beam antenna as claimed in claim 1, further comprising: a plurality of overlay couplers.

9. A multiple beam antenna as claimed in claim 8, wherein said overlay couplers connect said electrical connections to said switch circuitry.

10. A multiple beam antenna as claimed in claim 1, wherein said electrical connections connect each of said plurality of directional antennas to said switch circuitry.

11. A multiple beam antenna as claimed in claim 1, wherein the electrical connections are microstrip lines.

12. A multiple beam antenna as claimed in claim 1, wherein said flexible substrate is conformed in close proximity to a back plane (40).

13. A multiple beam antenna as claimed in claim 1, wherein at least some of the antenna elements are provided as microstrip antenna elements.

14. A multiple beam antenna as claimed in claim 1, wherein at least some of the antenna elements are provided as probe fed aperture elements.

15. A multiple beam antenna, as claimed in claim 1, wherein the switch circuitry and directional antennas are arranged on a common side of said substrate.

16. A multiple beam antenna as claimed in claim 1, wherein the substrate is arranged in a substantially 3-dimensional configuration to position the one dimensional arrays of antenna elements in columns, and wherein at least two adjacent columns are not coplanar.

17. A multiple beam antenna as claimed in claim 1, further comprising: a dielectric (60; 62) interposed between at least a portion of said substrate and said ground plane.

18. A multiple beam antenna as claimed in claim 1 having a substantially hexagonal cross-section.

19. A multiple beam antenna as claimed in claim 1 having a substantially conical shape.

20. An antenna module comprising a multiple beam antenna as claimed in claim 1.

21. An antenna module as claimed in claim 20, further comprising: a ground plane (40); electronics (32); a dielectric layer between said flexible substrate and said ground plane (60; 62); and an outer protective housing (29).

22. An antenna module as claimed in claim 21, further comprising: control software.

23. An antenna module as claimed in claim 21, wherein said flexible substrate is wrapped around said ground plane.

24. A communications network comprising a plurality of multiple beam antennas as claimed in claim 1.

25. A communications network comprising a plurality of antenna modules as claimed in any one of claims 20-23.

26. A method of fabricating a multiple beam antenna (20) comprising the steps of: forming a plurality of directional antennas in a conductive layer of a flexible substrate (24) having a single conductive layer;
forming a plurality of electrical connections (30) in said conductive layer connecting said antenna elements to at least one predetermined area of said substrate; and
forming a ground plane (40);
wherein said substrate being shaped so that said plurality of directional antennas point in prescribed directions and so that at least some directional antennas of said plurality of directional antennas are not coplanar, and, wherein said ground plane (40) conforms to the shape of the flexible substrate, and is arranged to oppose all antenna elements; **characterised in that**:
integrating into said multiple beam antenna a double sided or multi layer circuit board (32, 70, 80) disposed between the flexible substrate and the ground plane in the predetermined area of said substrate and arranged for coupling switching and/or beam forming circuitry to the plurality of electrical connections.

27. A method of fabricating a multiple beam antenna as claimed in claim 26, further comprising the step of: shaping said flexible substrate such that it fits against an object.

28. A method of fabricating a multiple beam antenna as claimed in claim 26, wherein said object comprises a housing.

29. A method of fabricating a multiple beam antenna as claimed in claim 28, further comprising the step of: mounting control electronics within said housing.

30. A method of fabricating a multiple beam antenna as claimed in claim 26, further comprising the step of: forming a beamformer in said conductive layer.

31. A method of fabricating a multiple beam antenna as claimed in claim 26, further comprising the step of:
connecting said flexible substrate to a second substrate with a plurality of overlay couplers.

## Patentansprüche

1. Mehrkeulenantenne (20) aufweisend:
ein nachgiebiges Trägermaterial (24) mit einer einzigen leitfähigen Schicht;
eine Vielzahl von ausrichtbaren Antennen gebildet auf der leitfähigen Schicht, wobei jede der Vielzahl von ausrichtbaren Antennen eines oder mehrere Antennenelemente aufweist;
eine Vielzahl von elektrischen Verbindungen (30), die auf der leitfähigen Schicht gebildet werden und welche die Antennenelemente mit wenigstens einem
vorbestimmten Bereich des Trägermaterials verbinden; und
eine Masseplatte (40);
worin das nachgiebige Trägermaterial so geformt ist, dass die Vielzahl von ausrichtbaren Antennen in vorgeschriebene Richtungen zeigen und so, dass wenigstens einige ausrichtbare Antennen der Vielzahl von ausrichtbaren Antennen nicht koplanar sind, und worin die Masseplatte (40) mit der Form des nachgiebigen Trägermaterials übereinstimmt und so angeordnet ist, dass sie allen
Antennenelementen gegenüberliegt; **dadurch gekennzeichnet, dass**:
die Mehrkeulenantenne eine zweiseitige oder mehrschichtige Leiterplatte (32, 70, 80) aufweist, die zwischen dem nachgiebigen Trägermaterial und der Masseplatte in dem vorbestimmten Bereich des Trägermaterials angeordnet ist und
ausgelegt ist, um Schaltkreise zur Formung von Keulen oder für Umschalter mit der Vielzahl von elektrischen Verbindungen zu koppeln.

2. Mehrkeulenantenne wie in Anspruch 1 beansprucht, worin die Vielzahl von ausrichtbaren Antennen und die Vielzahl von elektrischen Verbindungen in der leitfähigen Schicht in einem einzigen Herstellschritt gebildet werden.

3. Mehrkeulenantenne wie in Anspruch 1 beansprucht, ferner aufweisend: einen Keulenformer.

4. Mehrkeulenantenne wie in Anspruch 3 beansprucht, worin der Keulenformer in der leitfähigen Schicht gebildet ist.

5. Mehrkeulenantenne wie in Anspruch 1 beansprucht, worin die Vielzahl von Antennenelementen so angeordnet sind, dass sie nur doppelte Polarisierungen bereitstellen.

6. Mehrkeulenantenne wie in Anspruch 1 beansprucht, worin die Vielzahl von Antennenelementen in einer Matrix angeordnet sind.

7. Mehrkeulenantenne wie in Patentanspruch 6 beansprucht, worin die Matrix eine eindimensionale Matrix ist.

8. Mehrkeulenantenne wie in Anspruch 1 beansprucht, ferner aufweisend: eine Vielzahl von Deckschicht Kopplern.

9. Mehrkeulenantenne wie in Anspruch 8 beansprucht, worin die Deckschicht Koppler die elektrischen Verbindungen mit den Schaltkreisen für Umschalter verbinden.

10. Mehrkeulenantenne wie in Anspruch 1 beansprucht, worin die elektrischen Verbindungen jede aus der Vielzahl von ausrichtbaren Antennen mit den Schaltkreisen für Umschalter verbinden.

11. Mehrkeulenantenne wie in Anspruch 1 beansprucht, worin die elektrischen Verbindungen Mikrostripleitungen sind.

12. Mehrkeulenantenne wie in Anspruch 1 beansprucht, worin das nachgiebige Trägermaterial in enger Nachbarschaft übereinstimmend mit einer Rückplatte (40) gebildet ist.

13. Mehrkeulenantenne wie in Anspruch 1 beansprucht, worin wenigstens einige der Antennenelemente als Mikrostripantennenelemente ausgeführt sind.

14. Mehrkeulenantenne wie in Anspruch 1 beansprucht, worin wenigstens einige der Antennenelemente als Sonden zugeführte Öffnungselemente ausgeführt sind.

15. Mehrkeulenantenne wie in Anspruch 1 beansprucht, worin der Schaltkreis für Umschalter und die ausrichtbare Antenne auf einer gemeinsamen Seite des Trägermaterials angeordnet sind.

16. Mehrkeulenantenne wie in Anspruch 1 beansprucht, worin das Trägermaterial in einer im Wesentlichen dreidimensionalen Konfiguration angeordnet ist, um die eindimensionalen Matrixen von Antennenelementen in Säulen zu positionieren, und worin wenigstens zwei benachbarte Säulen nicht koplanar sind.

17. Mehrkeulenantenne wie in Anspruch 1 beansprucht, ferner aufweisend: ein Dielektrikum (60; 62), das zwischen wenigstens einem Teil des Trägermaterials und der Masseplatte eingefügt ist.

18. Mehrkeulenantenne wie in Anspruch 1 beansprucht, welche einen im Wesentlichen hexagonalen Querschnitt aufweist.

19. Mehrkeulenantenne wie in Anspruch 1 beansprucht, mit einer im Wesentlichen konischen Form.

20. Antennenmodul aufweisend eine Mehrkeulenantenne wie in Anspruch 1 beansprucht.

21. Antennenmodul wie in Anspruch 20 beansprucht, ferner aufweisend: eine Masseplatte (40); eine Elektronik (32); eine dielektrische Schicht zwischen dem nachgiebigen Trägermaterial und der Masseplatte (60; 62); und ein schützendes Außengehäuse (29).

22. Antennenmodul, wie in Anspruch 21 beansprucht, ferner aufweisend:
Steuerungssoftware.

23. Antennenmodul, wie in Anspruch 21 beansprucht, worin das nachgiebige Trägermaterial um die Masseplatte herumgewickelt ist.

24. Kommunikationsnetz, das eine Vielzahl von Mehrkeulenantennen, wie in Anspruch 1 beansprucht, aufweist.

25. Kommunikationsnetz, das eine Vielzahl von Antennenmodulen, wie in irgendeinem der Ansprüche 20 bis 23 beansprucht, aufweist.

26. Herstellverfahren für eine Mehrkeulenantenne (20) aufweisend die Schritte des:
Ausbildens von einer Vielzahl von ausrichtbaren Antennen in einer leitfähigen Schicht eines nachgiebigen Trägermaterials (24), welches eine einzige leitfähige Schicht aufweist;
des Ausbildens einer Vielzahl von elektrischen Verbindungen (30) in der leitfähigen Schicht, welche die Antennenelemente mit wenigstens einem vorbestimmten Bereich des Trägermaterials verbinden; und
des Ausbildens einer Masseplatte (40);
worin das Trägermaterial so geformt ist, dass die Vielzahl von ausrichtbaren Antennen in vorgeschriebene Richtungen zeigen und so, dass wenigstens einige ausrichtbare Antennen der Vielzahl von ausrichtbaren Antennen nicht koplanar sind, und worin die Masseplatte (40) mit der Form des nachgiebigen Trägermaterials übereinstimmt, und so angeordnet ist, dass sie allen Antennenelementen gegenüber liegt; **dadurch gekennzeichnet, dass**:
in die Mehrkeulenantenne eine doppelseitige oder mehrschichtige Leiterplatte (32, 70, 80) integriert wird, die zwischen dem nachgiebigen Trägermaterial und der Masseplatte in einem vorbestimmten Bereich des Trägermaterials angeordnet ist und ausgelegt ist, um Schaltkreise zur Formung von Keulen oder für Umschalter mit der Vielzahl von elektrischen Verbindungen zu koppeln.

27. Herstellverfahren für eine Mehrkeulenantenne, wie in Anspruch 26 beansprucht, ferner aufweisend den Schritt des: Ausformens des nachgiebigen Trägermaterials so, dass es gegen ein Objekt anliegt.

28. Herstellverfahren für eine Mehrkeulenantenne, wie in Anspruch 26 beansprucht, worin dieses Objekt ein Gehäuse aufweist.

29. Herstellverfahren für eine Mehrkeulenantenne, wie in Anspruch 28 beansprucht, ferner aufweisend den Schritt des: Montierens von Steuerungselektronik in dem Gehäuse.

30. Herstellverfahren für eine Mehrkeulenantenne, wie in Anspruch 26 beansprucht, ferner aufweisend den Schritt des: Ausbildens eines Keulenformers in der leitfähigen Schicht.

31. Herstellverfahren für eine Mehrkeulenantenne, wie beansprucht in Anspruch 26, ferner aufweisend den Schritt des: Verbindens des nachgiebigen Trägermaterials mit einem zweiten Trägermaterial mit einer Vielzahl von Deckschicht Kopplern.

## Revendications

1. Antenne à faisceaux multiples (20) comprenant :
un substrat flexible (24) incluant une seule couche conductrice ;
une pluralité d'antennes directives formées dans la couche conductrice, chaque antenne de ladite pluralité d'antennes directives comprenant un ou
plusieurs éléments d'antenne ;
une pluralité de connexions électriques (30) formées dans la couche conductrice connectant lesdits éléments d'antenne à au moins une zone prédéterminée dudit substrat ;
un plan de sol (40) ;
dans laquelle ledit substrat flexible est formé de manière que ladite pluralité d'antennes directives soit dirigée dans des directions prescrites et de manière qu'au moins certaines antennes directives de ladite pluralité d'antennes directives ne soient pas coplanaires, et dans laquelle ledit plan de sol (40) prend la forme du substrat flexible et est agencé de manière à opposer tous les éléments d'antenne ; **caractérisée en ce que** :
ladite antenne à faisceaux multiples comprend une carte de circuit imprimé à double face ou multicouche (32, 70, 80) disposée entre le substrat flexible et le plan de sol dans la zone prédéterminée dudit substrat et agencée pour coupler un circuit formant commutation et/ou faisceau à la pluralité de connexions électriques.

2. Antenne à faisceaux multiples selon la revendication 1, dans laquelle ladite pluralité d'antennes directives et ladite pluralité de connexions électriques sont formées dans la couche conductrice en une seule étape de fabrication.

3. Antenne à faisceaux multiples selon la revendication 1, comprenant en outre : un dispositif de formation de faisceau.

4. Antenne à faisceaux multiples selon la revendication 3, dans laquelle ledit dispositif de formation de faisceau est formé dans ladite couche conductrice.

5. Antenne à faisceaux multiples selon la revendication 1, dans laquelle la pluralité d'éléments d'antenne est agencée pour fournir des polarisations mixtes.

6. Antenne à faisceaux multiples selon la revendication 1, dans laquelle la pluralité d'éléments d'antenne est agencée en un réseau.

7. Antenne à faisceaux multiples selon la revendication 6, dans laquelle ledit réseau est un réseau en une dimension.

8. Antenne à faisceaux multiples selon la revendication 1, comprenant en outre : une pluralité de coupleurs superposés.

9. Antenne à faisceaux multiples selon la revendication 8, dans laquelle lesdits coupleurs superposés relient lesdites connexions électriques audit circuit de commutation.

10. Antenne à faisceaux multiples selon la revendication 1, dans laquelle lesdites connexions électriques relient chaque antenne directives de la pluralité d'antennes directives audit circuit de commutation.

11. Antenne à faisceaux multiples selon la revendication 1, dans laquelle lesdites connexions électriques sont des lignes microruban.

12. Antenne à faisceaux multiples selon la revendication 1, dans laquelle ledit substrat flexible est conformé à proximité immédiate d'un fond de panier (40).

13. Antenne à faisceaux multiples selon la revendication 1, dans laquelle au moins certains des éléments d'antenne sont conçus comme des éléments d'antenne microruban.

14. Antenne à faisceaux multiples selon la revendication 1, dans laquelle au moins certains des éléments d'antenne sont conçus comme des éléments d'ouverture couplés à une sonde.

15. Antenne à faisceaux multiples selon la revendication 1, dans laquelle le circuit de commutation et les antennes directives sont disposés sur un même côté dudit substrat.

16. Antenne à faisceaux multiples selon la revendication 1, dans laquelle le substrat est disposé en une configuration sensiblement tridimensionnelle pour positionner les réseaux unidimensionnels des éléments d'antenne en colonnes, et dans laquelle au moins deux colonnes adjacentes ne sont pas coplanaires.

17. Antenne à faisceaux multiples selon la revendication 1, comprenant en outre : un diélectrique (60 ; 62) intercalé entre au moins une partie dudit substrat et ledit plan de sol.

18. Antenne à faisceaux multiples selon la revendication 1 ayant une section transversale sensiblement hexagonale.

19. Antenne à faisceaux multiples selon la revendication 1 ayant une forme conique.

20. Module d'antenne comprenant une antenne à faisceaux multiples selon la revendication 1.

21. Module d'antenne selon la revendication 20, comprenant en outre : un plan de sol (40) ; des circuits électroniques (32) ; une couche diélectrique entre ledit substrat flexible et ledit plan de sol (40) ; et un boîtier extérieur de protection (29).

22. Module d'antenne selon la revendication 21, comprenant en outre : un logiciel de commande.

23. Module d'antenne selon la revendication 21, dans lequel ledit substrat flexible est enroulé autour dudit plan de sol.

24. Réseau de communication comprenant une pluralité d'antennes à faisceaux multiples selon la revendication 1.

25. Réseau de communication comprenant une pluralité de modules d'antenne selon l'une quelconque des revendications 20 à 23.

26. Procédé de fabrication d'une antenne à faisceaux multiples (20) comprenant les étapes consistant à : former une pluralité d'antennes directives dans une couche conductrice d'un substrat flexible (24) ayant une seule couche conductrice ;
former une pluralité de connexions électriques (30) dans ladite couche conductrice connectant lesdits éléments d'antenne à au moins une zone prédéterminée dudit substrat ; et
former un plan de sol (40) ;
dans lequel ledit substrat a une forme telle que ladite pluralité d'antennes directives soit dirigée dans des directions prescrites et qu'au moins certaines antennes directives de ladite pluralité d'antennes directives ne soient pas coplanaires, et dans lequel ledit plan de sol (40) prend la forme du substrat flexible et est agencé de manière à opposer tous les éléments d'antenne ;
**caractérisé en ce que** :
une carte de circuit imprimé à double face ou multicouche (32, 70, 80) est intégré dans ladite antenne à faisceaux multiples et est disposée entre le substrat flexible et le plan de sol dans la zone prédéterminée dudit substrat et agencée pour coupler un circuit formant commutation et/ou faisceau à la pluralité de connexions électriques.

27. Procédé de fabrication d'une antenne à faisceaux multiples selon la revendication 26, comprenant en outre l'étape consistant à : former ledit substrat flexible de sorte qu'il s'adapte contre un objet.

28. Procédé de fabrication d'une antenne à faisceaux multiples selon la revendication 26, dans lequel l'objet comprend un boîtier.

29. Procédé de fabrication d'une antenne à faisceaux multiples selon la revendication 28, comprenant en outre l'étape consistant à : monter des circuits électroniques de commande dans ledit boîtier.

30. Procédé de fabrication d'une antenne à faisceaux multiples selon la revendication 26, comprenant en outre l'étape consistant à : former un dispositif de formation de faisceau dans ladite couche conductrice.

31. Procédé de fabrication d'une antenne à faisceaux multiples selon la revendication 26, comprenant en outre l'étape consistant à :
relier ledit substrat flexible à un deuxième substrat avec une pluralité de coupleurs superposés.
